Europäisches Patentamt

European Patent Office

Office européen des brevets

(19)

(11) Veröffentlichungsnummer: **0 121 104**
**A1**

(12) **EUROPÄISCHE PATENTANMELDUNG**

(21) Anmeldenummer: **84102152.0**

(22) Anmeldetag: **01.03.84**

(51) Int. Cl.³: **G 01 F 11/26**
**B 65 D 35/00**

(30) Priorität: **07.03.83 DE 3308013**

(43) Veröffentlichungstag der Anmeldung:
**10.10.84** Patentblatt **84/41**

(84) Benannte Vertragsstaaten:
**AT BE CH DE FR GB IT LI LU NL SE**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Vierkötter, Peter**
**Sperberweg 7**
**D-5090 Leverkusen(DE)**

(54) Dosiervorrichtung.

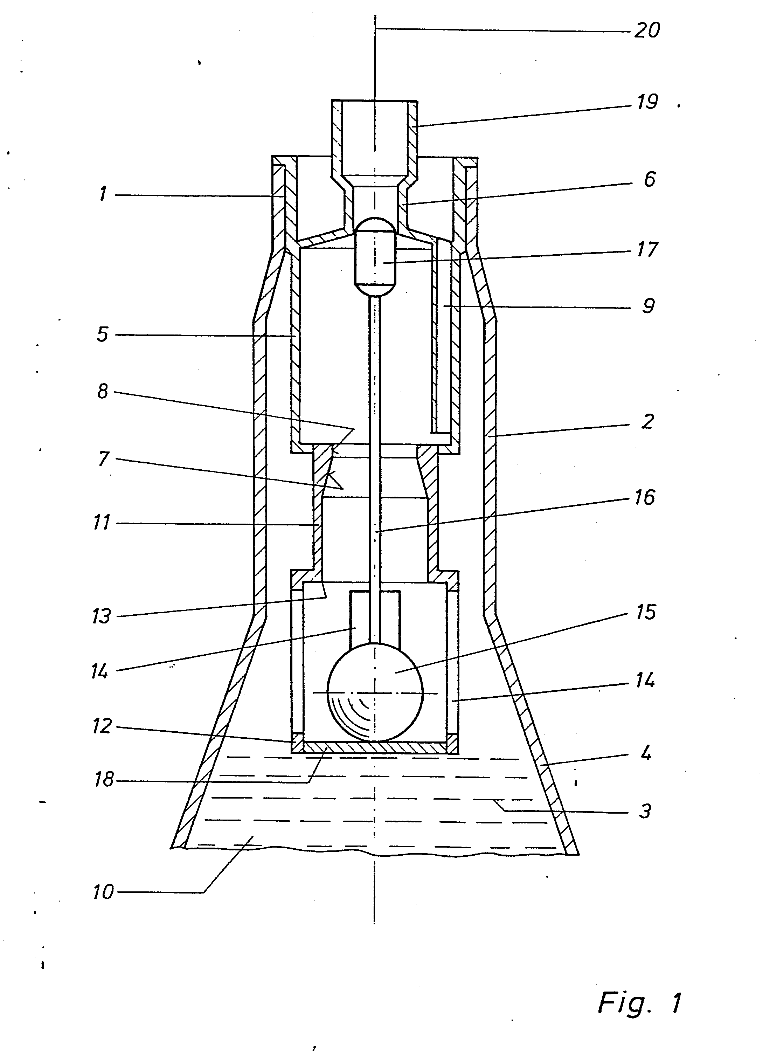

(57) Es wird eine Dosiervorrichtung zum Einsetzen in die Mündung (2) eines Flüssigkeitsbehälters (4) mit Kugelventil zwischen Behälterinnern (10) und Dosierkammer (5) beschrieben. Das aus Ventilkugel (15) und Ventilkugeldichtsitz (7) bestehende Kugelventil befindet sich an der behälterseitigen Einlaßöffnung (8) einer Dosierkammer (5). Um hierbei eine immer gleiche Dosierung unabhängig von der Kippgeschwindigkeit und dem vom Behälterfüllstand abhängigen hydrostatischen Druck zu erreichen, wird die Ventilkugel (15) über eine Kolbenstange (16) mit einem in der als Zylinder ausgebildeten Austrittsöffnung (6) der Dosierkammer (5) zu verschiebenden Kolben (17) verbunden (Fig. 1).

EP 0 121 104 A1

./...

Fig. 1

0121104

Henkelstraße 67
4000 Düsseldorf, den 4.3.1983

HENKEL KGaA
ZR-FE/Patente
Bor/Pr

P a t e n t a n m e l d u n g
D 6769

"Dosiervorrichtung"

Die Erfindung betrifft eine Dosiervorrichtung zum Einsetzen in die Mündung eines Flüssigkeitsbehälters, insbesondere einer Flasche, mit Kugelventil zwischen dem Behälterinnern und einer Dosierkammer bestehend aus einer in der Behälteraufrechtstellung in einem Korb ruhenden Ventilkugel und einem Ventilkugelführungsrohr zum Leiten der Ventilkugel in den Ventilkugeldichtsitz bei Kippen des Behälters, wobei der Korb und/oder das Führungsrohr mindestens eine Öffnung zum Behälterinnern aufweist. Die Erfindung betrifft ferner ein Verfahren zum Betrieb der Dosiervorrichtung.

Dosiervorrichtungen, die bei jedem Kippen des Behälters eine bestimmte Flüssigkeitsmenge freigeben, sind beispielsweise aus der DE-PS 12 02 672 bekannt. Hierbei handelt es sich um sogenannte Vorkammerdosierer, deren Volumen mindestens das Doppelte der Dosiermenge umfassen muß. Eine andere, aus dem DE-FM 78 10 073 bekannte Dosiervorrichtung ist zwar weniger voluminös, die Dosiermenge wird aber mit abnehmendem Behälterinhalt stetig geringer.

Weiterhin wird in der DE-OS 30 26 067 ein Dosierer beschrieben, mit dem ein Dosieren unter Druck bzw. durch Druck auf den Behälter erfolgen kann und damit ein einer bestimmten Produktmenge entsprechender "Spritzer" zu dosieren ist. Diese Vorrichtung enthält ein mindestens eine zum Behälterinnern führende, seitliche Öffnung aufweisendes

...

2

Ventilkugelführungsrohr. An das der Ausgießöffnung und dem Ventilkugeldichtsitz gegenüberliegende Längsende des Ventilkugelführungsrohrs schließt sich, ausgehend von der Rohrwand, ein sich auf einer größenordnungsmäßig etwa dem halben Kugeldurchmesser entsprechenden Länge trichterförmig erweiterndes Unterteil eines Kugelkorbs an. Bei Kippen dieses Dosierers in eine Schräglage tritt Flüssigkeit aus dem Behälter aus.

Der Erfindung liegt die Aufgabe zugrunde, eine Dosiervorrichtung zu schaffen, die unabhängig von der Kippgeschwindigkeit und dem vom Behälterfüllstand abhängigen hydrostatischen Druckunterschied immer die gleiche Dosierung ergibt. Die erfindungsgemäße Lösung besteht bei der eingangs genannten Dosiervorrichtung darin, daß die dem Ventilkugeldichtsitz gegenüberliegende Auslaßöffnung der Dosierkammer als Zylinder mit Kolbenverschluß ausgebildet ist, daß der Kolbenverschluß aus einem relativ zur Auslaßöffnung zu verschiebenden Kolben sowie einer eine feste Kopplung zwischen dem Kolben und der Ventilkugel darstellenden Kolbenstange besteht und daß die Länge der Kolbenstange größer ist als der Abstand zwischen dem Ventilkugeldichtsitz und der Ausgangsseite der zylindrischen Auslaßöffnung.

Die Länge der Kolbenstange und/oder die Länge der zylindrischen Auslaßöffnung und/oder des Kolbens werden vorzugsweise so gewählt, daß die Auslaßöffnung der Dosierkammer geöffnet ist, wenn die Ventilkugel im Ventilkugeldichtsitz liegt und daß die Auslaßöffnung in allen übrigen Positionen der Ventilkugel geschlossen ist. Demgemäß wird durch die Erfindung erreicht, daß die Dosierkammer bei mit Hilfe des Kolbens geschlossener Auslaßöffnung durch

...

HENKEL KGaA
ZR-FE/Patente
0121104

3

Kippen des Behälters in eine Schräglage zu füllen ist und bei Schwenken des Behälters in die Überkopfstellung durch selbsttätiges Verschieben des Kolbens und der über die Kolbenstange mit dem Kolben verbundenen Ventilkugel an der Auslaßseite zu öffnen und zugleich bzw. dadurch an der behälterseitigen Einlaßöffnung zu schließen ist. Wenn der Kolben die Auslaßöffnung freigibt, wird also gleichzeitig der Zulauf von Produkt aus dem Behälterinnern in die Dosierkammer durch die dann im Ventilkugeldichtsitz liegende Ventilkugel verschlossen. Der sich beim Entleeren des Behälters ändernde hydrostatische Druck hat keinen Einfluß auf die Dosiermenge.

Für Betrieb und Handhabung der Dosiervorrichtung ist es günstig, wenn die Ventilkugel in einer Schräglage der Behältermündung bzw. des Dosierers an einer Haltekante bzw. an einem Absatz zwischen Kugelkorb und Ventilkugelführungsrohr festgehalten wird, während gleichzeitig der Kolben die Auslaßseite der Dosierkammer verschließt. Hierzu ist unter Umständen eine gewisse Schräglage der Kolbenstange gegenüber der Längsachse des Dosierers erforderlich. Es ist deshalb günstig, wenn der Kolben und/oder die Kolbenstange eine gewisse Biegsamkeit bzw. Flexibilität besitzen, die eine Schräglage ohne Klemmen voraussetzt. In diesem Sinne kann die Funktion des Dosierers auch durch Ausbildung des ganzen Dosierers und insbesondere von dessen zylindrischer Auslaßöffnung aus flexiblem Kunststoff unterstützt werden.

HENKEL KGaA
0121104
ZR-FE/Patente

4

Anhand der schematischen Darstellung eines Ausführungsbeispiels werden weitere Einzelheiten der Erfindung erläutert. Es zeigen:

Fig. 1 eine Dosiervorrichtung in aufrechter Stellung;
Fig. 2 die Dosiervorrichtung von Fig. 1 in schräg nach
unten gerichteter Kippstellung; und
Fig. 3 die Dosiervorrichtung von Fig. 2 in Überkopfstellung.

Die Dosiervorrichtung nach Fig. 1 bis 3 wird über eine
Steck- bzw. Schraubverbindung 1 oder dergleichen in der
Mündung 2 eines flüssiges Produkt 3 enthaltenden Behälters 4 arretiert. Dieser Dosierer besteht im wesentlichen
aus einer Dosierkammer 5 mit zylindrischer Auslaßöffnung
6 und als Ventilkugeldichtsitz 7 ausgebildeter, behälterseitiger Einlaßöffnung 8. Die Dosierkammer 5 besitzt ausserdem eine von der Auslaßöffnung getrennte Belüftung 9,
die im Kammerinnern angrenzend an die Einlaßöffnung 8
mündet. An den Ventilkugeldichtsitz 7 schließt sich in
Richtung auf das Behälterinnere 10 ein Ventilkugelführungsrohr 11 an, das in einem Ventilkugelkorb 12 mündet.
An der Grenze zwischen Führungsrohr 11 und Kugelkorb 12
wird vorzugsweise ein Absatz bzw. eine Haltekante 13 vorgesehen. Im Bereich von Kugelkorb 12 und/oder Führungsrohr 11 wird mindestens ein Schlitz 14 vorgesehen, der
eine relativ großflächige Verbindungsöffnung zwischen
dem Innern des Dosierers und dem Behälterinnern 10 darstellen soll.

Außer den feststehenden Teilen gehört zu dem Dosierer
ein bewegliches Teil, das aus einer Ventilkugel 15, einer
Kolbenstange 16 und einem Kolben 17 zusammengesetzt ist.

...

5

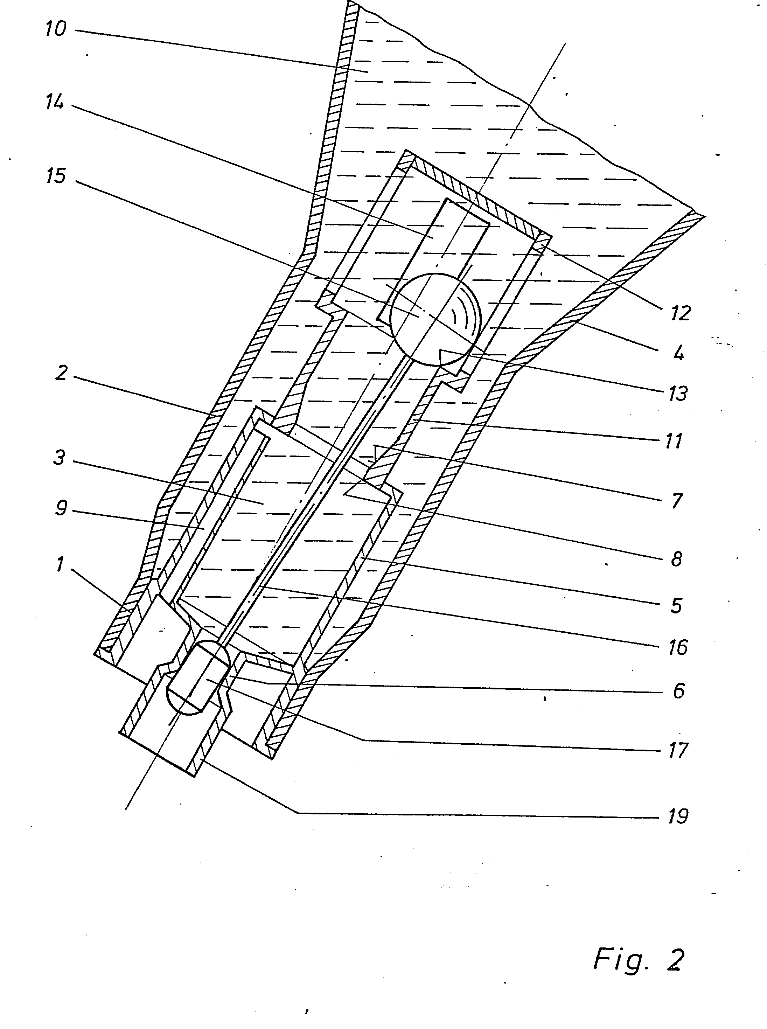

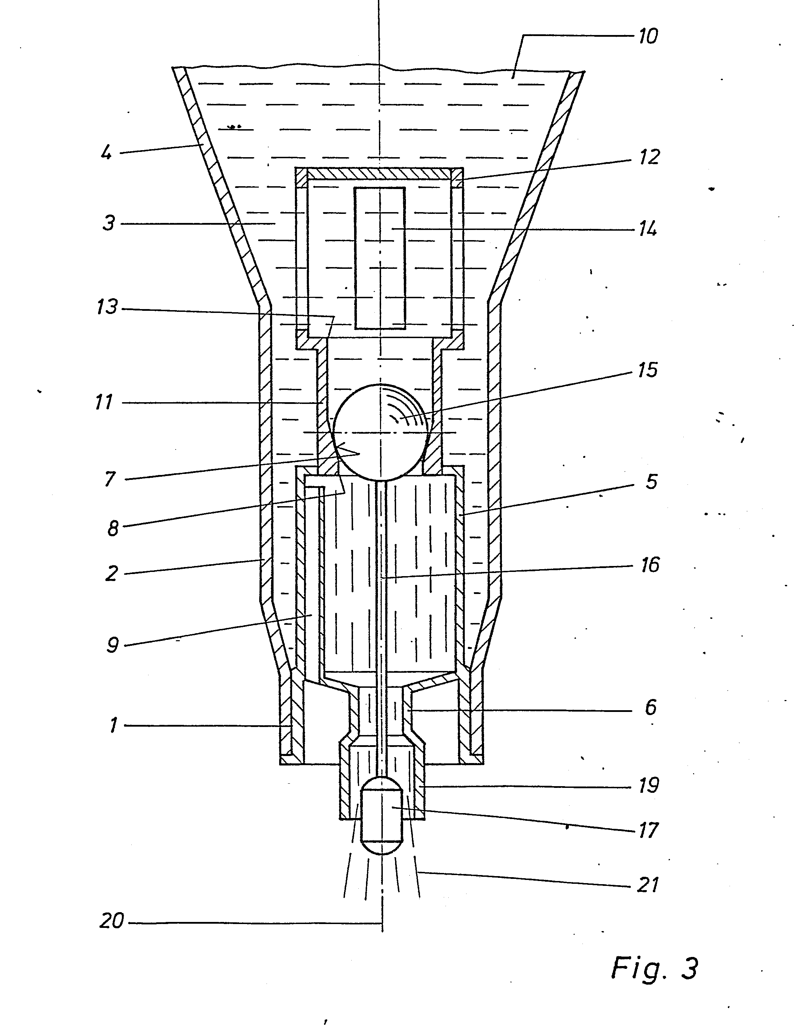

Die Länge der Kolbenstange 16 wird so bemessen, daß bei Anliegen der Ventilkugel 15 in der Aufrechtstellung gemäß Fig. 1 am behälterseitigen Boden 18 des Kugelkorbs 12 die zylindrische Auslaßöffnung 6 durch den Kolben 17 verschlossen ist, in der Schrägstellung nach Fig. 2 bei an der Haltekante 13 anliegender Ventilkugel 15 die zylindrische Austrittsöffnung 6 ebenfalls durch den Kolben 17 verschlossen ist aber in der Überkopfstellung nach Fig. 3 bei im Ventilkugeldichtsitz 7 befindlicher Ventilkugel 15 die Austrittsöffnung 6 der Dosierkammer 5 geöffnet ist, weil in dieser Stellung der Kolben 17 ganz durch die Auslaßöffnung 6 hindurch - gegebenenfalls in einen Auslaßtrichter 19 - geschoben worden ist. Die Offen- und Schließstellungen an der Auslaßöffnung 6 lassen sich natürlich auch durch Variation der Länge des Kolbens 17 und/oder der Auslaßöffnung 6 in der axialen Längsrichtung 20 der Vorrichtung beeinflussen.

Bei Betrieb wird die Dosiervorrichtung aus der Aufrechtstellung nach Fig. 1 in die schräg nach unten gerichtete Kippstellung von Fig. 2 geschwenkt, so daß die Kugel 15 zunächst noch auf der Haltekante 13 arretiert wird. In dieser Kippstellung fließt Produkt 3 über die Schlitze 14 in den Dosierer. Dabei wird die Dosierkammer 5 gefüllt. Nach dem Füllen der Dosierkammer 5 wird der Dosierer in die Überkopfstellung gemäß Fig. 3 geschwenkt. Hierbei fällt die Kugel 15 in den Ventilkugeldichtsitz 7, so daß die Verbindung zwischen der Dosierkammer 5 und dem Behälterinnern 10 verschlossen ist. Wegen der festen Kopplung von Ventilkugel 15 und Kolben 17 über die Kolbenstange 16 wird beim Einlauf der Kugel 15 in den Ventilkugeldichtsitz 7 der Kolben 17 aus der zylindrischen Auslaßöffnung 6 soweit nach außen in den Bereich des Trichters 19 vor-

...

HENKEL KGaA
ZR-FE/Patente

0121104

6

geschoben, so daß Produkt 21 aus der Dosierkammer 5 austreten kann. Das Entleeren der Dosierkammer 5 wird durch Einbau der Belüftung 9 wesentlich erleichtert. Die Belüftung 9 soll unmittelbar angrenzend an das Einlaßende 8 der Dosierkammer 5 enden, um einen Produktaustritt über die Belüftungsleitung 9 auszuschließen.

7

<u>P a t e n t a n s p r ü c h e</u>

1. Dosiervorrichtung zum Einsetzen in die Mündung (2) eines Flüssigkeitsbehälters (4), insbesondere einer Flasche, mit Kugelventil zwischen dem Behälterinnern (10) und einer Dosierkammer (5) bestehend aus einer in der Behälteraufrechtstellung in einem Korb (12) ruhenden Ventilkugel (15) und einem Ventilkugelführungsrohr (11) zum Leiten der Ventilkugel (15) in ihren Ventilkugeldichtsitz (7) bei Kippen des Behälters (4), wobei der Korb (12) und/oder das Führungsrohr (11) mindestens eine Öffnung (14) zum Behälterinnern (10) aufweist, dadurch gekennzeichnet, daß die dem Ventilkugeldichtsitz (7) gegenüberliegende Auslaßöffnung (6) der Dosierkammer (5) als Zylinder mit Kolbenverschluß ausgebildet ist, daß der Kolbenverschluß aus einem relativ zur Auslaßöffnung (6) zu verschiebenden Kolben (17) sowie einer eine feste Kopplung zwischen Kolben (17) und Ventilkugel (15) darstellenden Kolbenstange (16) besteht und daß die Länge der Kolbenstange (16) größer ist als der Abstand zwischen Ventilkugeldichtsitz (7) und Ausgangsseite der zylindrischen Auslaßöffnung (6).

2. Dosiervorrichtung nach Anspruch 1, dadurch gekennzeichnet, daß der Kolben (17) die zylindrische Auslaßöffnung (6) der Dosierkammer (5) in der Behälteraufrechtstellung sowie bei auf dem dem Ventilkugeldichtsitz (7) gegenüberliegenden Boden (18) des Korbs (12) liegender Ventilkugel (15) verschließt und daß sich der Kolben (17) in der Behälterausgießstellung bei in den Ventilkugeldichtsitz (7) abgesenkter Ventilkugel (15) mit Abstand außen vor der zylindrischen Auslaßöffnung (6) befindet.

. . .

8

3. Dosiervorrichtung nach Anspruch 1 oder 2, dadurch gekennzeichnet, daß sich der Kolben (17) in einer Schrägstellung des Behälters (4) innerhalb der zylindrischen Auslaßöffnung (6) befindet und dadurch die Dosierkammer (5) nach außen hin verschließt.

4. Dosiervorrichtung nach einem oder mehreren der Ansprüche 1 bis 3, dadurch gekennzeichnet, daß zwischen Korb (12) und Führungsrohr (11) eine ein Abgleiten der Ventilkugel (5) bei Behälterschrägstellung verhinderte Haltekante (13) vorgesehen ist und daß der Kolben (17) die zylindrische Auslaßöffnung (6) bei auf der Haltekante (13) liegender Ventilkugel (15) verschließt.

5. Dosiervorrichtung nach einem oder mehreren der Ansprüche 1 bis 4, dadurch gekennzeichnet, daß die Dosierkammer (5) eine gesonderte Belüftung (9) besitzt.

6. Dosiervorrichtung nach einem oder mehreren der Ansprüche 1 bis 5, dadurch gekennzeichnet, daß der Kolben (17) und/oder die Kolbenstange (16) aus flexiblem Material bestehen.

7. Verfahren zum Betrieb der Dosiervorrichtung nach einem oder mehreren der Ansprüche 1 bis 6, dadurch gekennzeichnet, daß die Dosierkammer (5) der in eine Behältermündung (2) gesetzten Dosiervorrichtung in einer Schrägstellung des zugehörigen Behälters (4) gefüllt und in einer Überkopfstellung des Behälters (4) geleert wird.

Bezugszeichenliste

1  =  Verbindung

2  =  Mündung

3  =  Produkt

4  =  Behälter

5  =  Dosierkammer

6  =  Auslaßöffnung

7  =  Ventilkugeldichtsitz

8  =  Einlaßöffnung

9  =  Belüftung

10  =  Behälterinneres

11  =  Ventilkugelführungsrohr

12  =  Ventilkugelkorb

13  =  Haltekante

14  =  Schlitz

15  =  Ventilkugel

16  =  Kolbenstange

17  =  Kolben

18  =  Boden (12)

19  =  Auslaßtrichter

20  =  Längsrichtung

21  =  Produkt

1/3

*Fig. 1*

10

14

15

12

4

13

2

11

3

7

9

8

5

1

16

6

17

19

*Fig. 2*

Fig. 3

**Europäisches Patentamt**

# EUROPÄISCHER RECHERCHENBERICHT

Nummer der Anmeldung

EP 84102152.0

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | GB - A - 14 045 (LAKE)  <br> * Fig. 2-4 * | 1,3 | G 01 F 11/26 <br> B 65 D |
| | -- | | |
| Y | AT - B - 71 180 (KRUMBHOLZ & LAMM) <br> * Fig. 1,2 * | 1,3 | |
| | -- | | |
| D,A | DE - A1 - 3 026 067 (HENKEL KGaA) <br> * Fig. 1-3 * | 1 | |
| | -- | | |
| A | CH - A5 - 630 578 (DESOMED) <br> * Zusammenfassung; Fig. 1 * | 1,7 | |
| | -- | | |
| A | US - A - 4 063 666 (DOWING et al.) <br> * Fig. 3,4; Spalte 4, Zeile 61 - Spalte 6, Zeile 34 * | 1,7 | |
| | ---- | | |

**RECHERCHIERTE SACHGEBIETE (Int. Cl. 3)**

G 01 F 11/00

B 65 D 35/00

B 65 D 47/00

Der vorliegende Recherchenbericht wurde für alle Patentansprüche erstellt.

| Recherchenort | Abschlußdatum der Recherche | Prüfer |
|---|---|---|
| WIEN | 08-06-1984 | BURGHARDT |